# EUROPÄISCHE PATENTSCHRIFT

(11) **EP 4 624 063 B1**
(45) Veröffentlichungstag und Bekanntmachung des Hinweises auf die Patenterteilung: **25.11.2026**
(21) Anmeldenummer: 25165033.9
(22) Anmeldetag: 20.03.2025
(51) Int. Cl.: B07C 5/36, B65G 61/00, B65G 57/00

(54) **VORRICHTUNG UND VERFAHREN ZUM SORTIEREN VON PALETTEN ANHAND IHRES PALETTEN-TYPS**
APPARATUS AND METHOD FOR SORTING PALLETS ACCODING TO THEIR PALLET TYPE
DISPOSITIF ET PROCÉDÉ DE TRI DE PALETTES SUR LA BASE DE LEUR TYPE PALETTE

(30) Priorität: 25.03.2024 DE 102024108436
(43) Veröffentlichungstag der Anmeldung: 01.10.2025
(73) Patentinhaber: HTR Paletten-Service GmbH, 63546 Hammersbach (DE)
(72) Erfinder: Hertsch, Wolfgang, 63477 Maintal (DE); Bratz, Joachim, 63584 Gründau (DE)
(74) Vertreter: Wolf & Wolf Patentanwaltsgesellschaft mbH

(56) Entgegenhaltungen:
- EP-A1- 4 046 945
- US-B1- 11 180 317
- US-B1- 11 691 784

## Beschreibung

Die Erfindung betrifft eine Vorrichtung zum Sortieren von Paletten anhand ihres Paletten-Typs, aufweisend eine Paletten-Zuführung, vorzugsweise eine Erfassungseinheit zum Erfassen des Paletten-Typs zugeführter Paletten, einen Roboter mit einem um eine vertikale Achse drehbaren Roboterarm, und mehrere Paletten-Stapelplätze zur stapelförmigen Aufnahme von nach Paletten-Typ sortierten Paletten unter Bildung jeweils sortierter Palettenstapel, wobei der Roboterarm zum Entnehmen einer Palette von mindestens einer Übernahmestelle der Paletten-Zuführung und zur Ablage der Palette auf einem der Paletten-Stapelplätze ausgelegt ist.

Weiterhin betrifft die Erfindung ein Verfahren zum Sortieren von Paletten anhand ihres Paletten-Typs, umfassend die Verfahrensschritte:
(a) Bereitstellen von Paletten unterschiedlicher Paletten-Typen mittels einer Paletten-Zuführung,
(b) vorzugsweise Erfassen des Paletten-Typs der bereitgestellten Paletten mit einer Erfassungseinheit,
(c) Entnehmen einer Palette von mindestens einer Übernahmestelle der Paletten-Zuführung mit einem um eine vertikale Achse drehbaren Roboterarm,
(d) Ablegen der Palette auf einem von mehreren Paletten-Stapelplätzen für Paletten eines bestimmten Paletten-Typs anhand des für diese Palette erfassten Paletten-Typs mit dem Roboterarm,
(e) Bilden sortierter Palettenstapel durch Wiederholen der Verfahrensschritte (c) und (d).

"Paletten" sind Lademittel für Güter, üblicherweise in Form eines flachen Untersatzes. Sie finden Verwendung für schwere Einzelgüter, aber auch zum Bündeln von Gütern. Durch ihre Form erleichtern sie die Handhabung der Güter, also das Transportieren, Stapeln und Lagern dieser Güter, insbesondere mit einem Gabelstapler.

Auf dem Markt gibt es eine Vielzahl unterschiedlicher "Paletten-Typen". Beispielsweise können Paletten - in Abhängigkeit von ihrer Widerstandsfähigkeit - für den einmaligen Gebrauch (Einweg-Paletten) oder den mehrmaligen Gebrauch (Mehrweg-Paletten) bestimmt sein. Sie können sich weiterhin in ihren Abmessungen, dem Material, aus dem sie gefertigt sind (Holz, Kunststoff, Metall), in ihrer Bauart oder Bedienart (Zweiweg- oder Vierweg-Paletten) unterscheiden. Zwar wird in europäischen Ländern häufig die Europalette mit standardisierten Maßen von 1.200 x 800 mm verwendet. Daneben gibt es aber viele weitere, ebenfalls standardisierte Mehrwegpaletten, beispielsweise die Düsseldorfer Mehrwegpalette, die Industriepalette, Chemiepaletten und viele mehr.

Der Begriff "Paletten-Typ" im Sinne der Erfindung ist aber nicht allein auf rein bauliche Kriterien oder Merkmale der Paletten beschränkt. Er umfasst auch alle weiteren Kriterien anhand derer Paletten sortierbar sind, beispielsweise nach ihrem Zustand (defekt, reparaturbedürftig, einsatzbereit), nach ihrem Gebrauchszweck (Auseinzelung von Einwegpaletten) oder nach dem Feuchtigkeitsgrad.

Zurückgegebene (Mehrweg-)Paletten sind regelmäßig eine Mischung von Paletten verschiedener Paletten-Typen. Mit der erfindungsgemäßen Vorrichtung und dem erfindungsgemäßen Verfahren sind solche Paletten-Mischungen weitgehend automatisiert sortierbar.

In der Praxis besteht grundsätzlich der Wunsch, Mehrweg-Paletten nach ihrem Gebrauch möglichst einfach und schnell einer erneuten Verwendung zuzuführen. Hierfür ist es üblich, die Paletten nach ihrem Paletten-Typ zu sortieren und entsprechend zu lagern. Das Sortieren größerer Paletten-Mengen nach ihrem Paletten-Typ ist aber arbeits- und zeitintensiv; es erfordert darüber hinaus auch einen gewissen Raumbedarf. Diese Arbeiten werden daher häufig in speziell dafür ausgerichteten Paletten-Sammelstellen durchgeführt, die von Paletten-Benutzern entladene Paletten übernehmen, überprüfen und sortieren, um sie schließlich als "typenreine" Palettenstapel bei Bedarf den Paletten-Benutzern wieder zur Verfügung zu stellen. Zum Sortieren und Stapeln der Paletten werden üblicherweise teil- oder voll-automatisierte Vorrichtungen eingesetzt.

Bekannte Vorrichtungen, die zum Sortieren und Stapeln von Paletten anhand ihres Paletten-Typs eingesetzt werden, weisen regelmäßig eine Paletten-Zuführung, vorzugsweise eine Erfassungseinheit zum Erfassen des Paletten-Typs, mehrere Paletten-Stapelplätze für Paletten eines Typs und einen Roboterarm auf, der durch Umlagern der Paletten auf den zugehörigen Paletten-Stapelplatz entsprechend des erfassten Paletten-Typs, den eigentlichen Sortiervorgang abschließt.

Die Paletten-Zuführung dient zum Bereitstellen von Paletten unterschiedlicher Paletten-Typen. Meist erfolgt die Paletten-Zuführung mit einem Transportband. Um Paletten anhand ihres Paletten-Typs sortieren zu können, ist es notwendig, den Paletten-Typ jeder Palette zu erfassen. Die Bereitstellung der Paletten erfolgt häufig zunächst in zufälliger Reihenfolge unabhängig vom Paletten-Typ; sie kann aber auch bereits (teilweise) vorsortiert erfolgen, beispielsweise, indem Paletten eines Typs oder bestimmter Typen jeweils auf einem separaten Förderband bereitgestellt werden.

Ein nachgeordneter Roboterarm übernimmt das Stapeln der Paletten zu einem Palettenstapel eines Paletten-Typs. So ist aus der EP 4 046 945 A1 ein System zum Sortieren und Stapeln von Paletten bekannt, bei dem die zu sortierenden Paletten vorsortiert über zwei Transporteinrichtungen bereitgestellt und mit einem Roboterarm auf vier ortsfeste Paletten-Stapelplätze für Paletten eines Paletten-Typs im Umkreis des Roboterarms nach Paletten-Typ sortiert abgelegt und gestapelt werden. Mit der Vorrichtung lassen sich allerdings nur vier verschiedene Paletten-Stapelplätze bedienen, sodass die Vorrichtung auf das Sortieren und Stapeln von vier Typen von Paletten beschränkt ist.

In der Praxis bestehen aber die zu sortierenden Mehrweg-Paletten-Gesamtheiten regelmäßig aus einer wesentlich größeren Zahl von Paletten-Typen. Sie enthalten häufig mehr als 10 Paletten-Typen, wobei zum Teil auch beschädigte oder Einweg-Paletten enthalten sein können, was die Anzahl zu unterscheidender Paletten-Typen weiter erhöht. Zwar ließe sich grundsätzlich durch ein Aneinanderreihen von mehreren, bekannten Vorrichtungen eine tiefergehende Sortierung erreichen. Dies ist aber konstruktiv aufwändig und zeit- und kostenintensiv und erfordert einen sehr großen Bauraum.

Vor diesem Hintergrund erscheint es daher erstrebenswert, in einem Arbeitsschritt möglichst viele Paletten unterschiedlichen Typs gleichzeitig typenrein sortieren und stapeln zu können.

Der vorliegenden Erfindung liegt daher die Aufgabe zugrunde, eine Vorrichtung zum Sortieren von Paletten anhand ihres Paletten-Typs anzugeben, die ein gleichzeitiges Sortieren möglichst vieler unterschiedlicher Paletten-Typen ermöglicht. Weiterhin liegt der vorliegenden Erfindung die Aufgabe zugrunde, ein einfach durchführbares und kostengünstiges Verfahren zum Sortieren von Paletten anhand ihres Paletten-Typs anzugeben, das ein gleichzeitiges Sortieren möglichst vieler unterschiedlicher Paletten-Typen ermöglicht.

Im Hinblick auf die Vorrichtung zum Sortieren von Paletten anhand ihres Paletten-Typs wird die oben genannte Aufgabe erfindungsgemäß durch die im Kennzeichen des Patentanspruchs 1 aufgeführten Merkmale gelöst.

Nach der Erfindung ist gegenständlich also vorgesehen, dass die Vorrichtung ein erstes Palettenstapel-Karussell umfasst, auf dem mehrere der Paletten-Stapelplätze angeordnet sind, wobei jeder dieser Paletten-Stapelplätze durch Drehen des Palettenstapel-Karussells in eine erste ortsfeste Paletten-Ablageposition verbringbar ist, die der Roboterarm bedient.

Bei der gattungsgemäßen, bekannten Vorrichtung zum Sortieren von Paletten wird zum Sortieren und zum Stapeln der Paletten ein Roboter mit einem um eine vertikale Achse drehbaren Roboterarm eingesetzt. Der Einsatz eines solchen Roboterarms hat mehrere Vorteile. So zeichnen sich derartige Roboter regelmäßig durch einen einfachen Aufbau, eine gute und einfache Ansteuerbarkeit, kurze Verfahrwege, hohe Prozessgeschwindigkeiten und eine hohe Effizienz und Präzision aus.

Der Nachteil eines Roboters mit einem Roboterarm liegt allerdings in seinem begrenzten Arbeitsbereich. Dies macht sich beispielsweise bemerkbar, wenn mit dem Roboterarm größere Gegenstände wie Paletten gehandhabt werden sollen. So bedarf es notwendigerweise einer Übernahmestelle, an der Paletten dem Roboterarm bereitgestellt und von diesem übernommen werden können, und mindestens zwei weiteren Paletten-Stapelplätzen zum sortierten Ablegen eines ersten und eines zweiten Typs von Paletten. Durch den großen Raumbedarf üblicher Paletten ist damit regelmäßig schon ein Großteil des Arbeitsbereichs des Roboterarms belegt und das Vorsehen weiterer, ortsfester Paletten-Stapelplätze im Arbeitsbereich des Roboterarms kaum oder nur in begrenztem Umfang möglich. Dies schränkt die Anzahl der Paletten-Typen ein, die gleichzeitig mit dem Roboterarm sortiert werden können.

Der vorliegenden Erfindung liegt die Idee zugrunde, anstelle der zahlenmäßig begrenzten, ortsfesten Paletten-Stapelplätze bewegliche Paletten-Stapelplätze vorzusehen, die bei Bedarf in den Arbeitsbereich des Roboterarms verbracht werden können. Hierdurch kann die Anzahl der mit dem Roboterarm bedienbaren Paletten-Stapelplätze erheblich und nahezu beliebig erhöht werden. Dadurch, dass erfindungsgemäß die Paletten-Stapelplätze auf einem Palettenstapel-Karussell angeordnet sind, lassen sich die beweglichen Paletten-Stapelplätze besonders einfach in den Arbeitsbereich des Roboterarms verbringen, nämlich durch Drehen des Karussells, und wieder aus dem Arbeitsbereich entfernen, und zwar ebenfalls durch Drehen des Karussells. Im einfachsten Fall bedient der Roboterarm dabei unabhängig von der Drehposition des Palettenstapel-Karussells nur eine einzige ortsfeste Paletten-Ablageposition auf dem Paletten-Karussell. Die Zuführung des dem Paletten-Typ der abzulegenden Palette entsprechenden (richtigen) Paletten-Stapelplatzes erfolgt über die Drehung des Palettenstapel-Karussells.

Ein solches Palettenstapel-Karussell ist besonders leicht ansteuerbar, wenn es nur in eine Richtung betrieben wird. Alternativ kann das Karussell aber auch in beiden Drehrichtungen betrieben werden, um die Verfahrwege der Paletten-Stapelplätze und eventuell darauf befindlicher Palettenstapel in den Arbeitsbereich des Roboters so kurz wie möglich zu halten. Gleichzeitig können beim Einsatz eines Palettenstapel-Karussells die übrigen, nicht im Arbeitsbereich des Roboterarms befindlichen Paletten-Stapelplätze in räumlicher Nähe desselben gehalten werden, was kurze Prozesszeiten begünstigt und gleichzeitig einen geringen Raumbedarf erfordert.

Bei einer bevorzugten Ausgestaltung der erfindungsgemäßen Vorrichtung umfasst die Vorrichtung mindestens ein zweites Palettenstapel-Karussell, auf dem ebenfalls mehrere der Paletten-Stapelplätze angeordnet sind, wobei jeder dieser Paletten-Stapelplätze durch Drehen des zweiten Karussells in eine zweite ortsfeste Paletten-Ablageposition verbringbar ist, die der Roboterarm bedient.

Ein zweites Palettenstapel-Karussell erfordert mindestens eine zweite ortsfeste Paletten-Ablageposition im Arbeitsbereich des Roboterarms. Daher ist das zweite Palettenstapel-Karussell so angeordnet, dass die zweite ortsfeste Paletten-Ablageposition des Roboterarms mit einem der Paletten-Stapelplätze auf dem zweiten Palettenstapel-Karussell überlappt. Durch Drehen des zweiten Palettenstapel-Karussells kann jeder der sich darauf befindenden Paletten-Stapelplätze in die Paletten-Ablageposition verbracht werden. Eine Vorrichtung mit zwei Palettenstapel-Karussells hat mehrere Vorteile. Einerseits erhöht sich durch das zweite Palettenstapel-Karussell die Anzahl der "beweglichen" Paletten-Stapelplätze, die bei Bedarf in den Arbeitsbereich des Roboters verbracht werden können. Dies ließe sich zwar auch über ein einziges Paletten-Karussell erreichen, allerdings können durch das zweite Paletten-Karussell die Radien des ersten Paletten-Karussells und des zweiten Palettenstapel-Karussells kleiner gewählt werden. Hierdurch verringert sich das Gewicht und damit die Trägheit beider Karussells, womit eine Erhöhung der Prozessgeschwindigkeit einhergeht. Gleichzeitig können die Drehwege beider Karussells möglichst gering gehalten werden, was sich ebenfalls positiv auf die Prozessgeschwindigkeit auswirkt.

In diesem Zusammenhang hat es sich als günstig erwiesen, wenn der Roboterarm einen Arbeitsradius aufweist, auf dem die Übernahmestelle, die erste Ablageposition und die zweite Ablageposition angeordnet sind.

Ein Roboterarm kann transversal bewegbar oder teleskopierbar sein und dadurch in verschiedenen Arbeitsradien arbeiten. Liegen die Übernahmestelle, die erste Ablageposition und die zweite Ablageposition auf demselben Arbeitsradius, muss der Roboterarm nicht zwischen verschiedenen Arbeitsradien hin und her bewegt werden. Mit anderen Worten: die Übernahmestelle, die erste Ablageposition die zweite Ablageposition liegen innerhalb der Bedienweite beziehungsweise der Griffweite des Roboterarms, und zwar derart, dass keine Translation des Roboters oder ein Verlängern bzw. Verkürzen des Roboterarms erforderlich wird. Dies erleichtert die Ansteuerung des Roboterarms und erhöht die Prozessgeschwindigkeit.

Vorteilhafterweise weist der Roboterarm eine Längsachse auf, wobei die erste Ablageposition und die zweite Ablageposition so gewählt sind, dass die Längsachse des Roboterarms im Bereich der ersten Ablageposition radial zum ersten Palettenstapel-Karussell und/oder im Bereich der zweiten Ablageposition radial zum zweiten Palettenstapel-Karussell verläuft.

Wenn im Bereich der ersten bzw. zweiten Ablageposition die Längsachse des Roboterarms radial zum jeweiligen Palettenstapel-Karussell verläuft, ist vor dem Ablegen der Paletten auf den zugehörigen Paletten-Stapelplatz kein Drehen der Paletten um ihre Hochachse erforderlich. Dies erleichtert die Ansteuerung des Roboterarms und wirkt sich günstig auf die Prozessgeschwindigkeit aus. Vorzugsweise führt der Roboterarm von der Übernahmestelle zur Ablageposition eine Dreh-/Schwenk-Bewegung im Bereich von 110° bis 130° aus. Die Drehung kann im oder entgegen dem Uhrzeigersinn erfolgen.

Es hat sich bewährt, wenn auf dem ersten und/oder zweiten Palettenstapel-Karussell mindestens vier Paletten-Stapelplätze, besonders bevorzugt mindestens acht Paletten-Stapelplätze, vorzugsweise zwölf Paletten-Stapelplätze, angeordnet sind.

Das erste Palettenstapel-Karussell und/oder das zweite Palettenstapel-Karussell weisen erfindungsgemäß jeweils mehrere Paletten-Stapelplätze auf. Dabei gilt grundsätzlich: je mehr Paletten-Stapelplätze auf beiden Palettenstapel-Karussells insgesamt angeordnet sind, umso mehr Paletten unterschiedlichen Typs können mit der Vorrichtung typenrein sortiert werden. Vorzugsweise weisen das erste und das zweite Palettenstapel-Karussell dieselbe Anzahl von Paletten-Stapelplätzen auf oder sie unterscheiden sich in der Anzahl der Paletten-Stapelplätze. Zwei in ihrer Paletten-Stapelplatz-Anzahl identische Palettenstapel-Karussells erweisen sich als vorteilhaft, wenn die zu sortierenden Paletten-Typen in der Paletten-Gesamtheit annähernd gleichverteilt sind. Dann sind die Drehwege der Karussells für jeden Paletten-Typ im Mittel in etwa gleich lang. Die Karussells haben in dem Fall auch bevorzugt den gleichen Durchmesser, was die Paletten-Entnahme aus den Karussells vereinfacht, da die beiden Ablagepositionen einfach auf einer gemeinsamen Linie liegen können, die keines der Karussells schneidet.

Unterscheiden sich das erste und das zweite Palettenstapel-Karussell aber in der Anzahl der Paletten-Stapelplätze oder in ihrem Durchmesser, können die Stapelplätze des weniger dicht belegten oder kleineren Karussells im Mittel schneller in die zugehörige Ablageposition verbracht werden. Dies hat Vorteile, wenn in der zu sortierenden Paletten-Gesamtheit einige Paletten-Typen häufiger vorkommen. Dann können die Paletten-Stapelplätze für die häufiger vorkommenden Paletten-Typen auf dem kleineren Karussell angeordnet werden. Dies hat den Vorteil, dass die Paletten-Stapelplätze für die häufiger vorkommenden Paletten-Typen schneller in die zugehörige Ablageposition verbracht werden können, was die Prozesszeiten verkürzt. Für die seltener vorkommenden Paletten-Typen hingegen können die längeren Prozesszeiten des größeren Palettenstapel-Karussells in Kauf genommen werden. Neben den oben genannten Varianten können auf dem ersten und/oder zweiten Palettenstapel-Karussell auch mindestens sechs oder mindestens zehn Paletten-Stapelplätze vorgesehen sein. Im Hinblick auf die Drehbarkeit des ersten und/oder zweiten Karussells im nahezu vollständig beladenen Zustand hat es sich allerdings als günstig erwiesen, wenn das erste und/oder das zweite Karussell nicht mehr als 16 Paletten-Stapelplätze aufweist.

Bei einer besonders bevorzugten Ausgestaltung der erfindungsgemäßen Vorrichtung weist der Roboterarm einen Greifer mit einer Doppelgabel auf.

Die Doppelgabel umfasst zwei Gabeln mit jeweils mindestens zwei in etwa parallel zueinander verlaufenden Zinken. Die Gabeln sind dabei so übereinander angeordnet, dass die von den Zinken der jeweiligen Gabel aufgespannten Flächen in etwa parallel zueinander verlaufen. Um als Greifer zu fungieren, können die Doppelgabeln aufeinander zu bewegt werden und/oder mit ihren Zinken-Ebenen leicht zueinander verkippt werden. Der Vorteil der Doppelgabel gegenüber einer einfachen Gabel liegt darin, dass eine Palette nicht nur von ihrer Unterseite, also im Bereich der Palettenfüße angehoben, sondern zwischen den beiden Gabeln der Doppelgabel derart fixiert werden kann, sodass sie damit auch um 180° gedreht werden kann. Im Hinblick darauf hat der Greifer eine sich in Richtung der Gabeln erstreckende Greifer-Längsachse und ist bevorzugt um die Greifer-Längsachse um mindestens 180° verdrehbar. Dies ermöglicht ein Verdrehen der Palette um 180°, was zum Verschachteln der Paletten beim Stapeln genutzt werden kann. Hierzu werden die Paletten wechselweise mit ihrer Oberseite und ihrer Fußseite auf dem Paletten-Stapelplatz abgelegt.

Vorteilhafterweise weisen das erste und/oder das zweite Paletten-Karussell jeweils eine einzige, vorgegebene Paletten-Abgabestelle zur Abgabe sortierter Palettenstapel auf, in die die jeweiligen Paletten-Stapelplätze durch Drehen des jeweiligen Karussells verbringbar sind.

Die Paletten-Abgabestellen des ersten und des zweiten Karussells sind vorzugsweise ortsfest; sie entsprechen genau einer Position auf dem ersten Karussell beziehungsweise dem zweiten Karussell. Durch Drehen des ersten Karussells kann jeder der auf dem ersten Karussell angeordneten Paletten-Stapelplätze in die Abgabestelle des ersten Karussells verbracht werden. Entsprechendes gilt für das zweite Karussell. Die Paletten-Abgabestelle ermöglicht eine Übergabe vollständiger, sortierter Palettenstapel an eine Abtransport-Vorrichtung, beispielsweise einen Rollenförderer oder einem Kettenförderer, mit dem vollständige, sortierte Palettenstapel einem Lagerort, einem Sammelplatz oder ihrer unmittelbaren Wiederverwendung zuführbar sind.

Dabei hat sich als günstig erwiesen, wenn die Abgabestelle an einer Drehposition des Karussells vorgesehen ist, an der die abzugebenden Paletten eine Orientierung haben, die ihrer Orientierung an der Übernahmestelle entspricht.

Die Palette hat eine Länge, eine Breite und eine Höhe. Länge und Breite sind die zwei längeren Achsen (x-Achse, y-Achse), die zusammen eine Ebene aufspannen, auf der die Höhenachse senkrecht steht. Mit "gleicher Orientierung" ist hier gemeint, dass die beiden längeren Achsen (x-Achse, y-Achse) an der Abgabestelle und an der Übernahmestelle gleichermaßen im Raum orientiert und nicht um einen Winkel ungleich 180 Grad oder ungleich 360 Grad verdreht sind.

Denn die Abgabe von Palettenstapeln kann so einfach wie möglich gehalten werden, wenn der abzugebende Palettenstapel bei der Abgabe vom Karussell nicht gedreht wird oder werden muss. In diesem Fall hat die Orientierung der Paletten des abzugebenden Palettenstapels allerdings wesentlichen Einfluss auf die Richtung des Abtransports. Durch die gleiche Orientierung der Paletten an Übergabestelle und Abgabestelle verlaufen die Paletten-Zuführung und die Paletten-Abgabe gleichgerichtet, d.h. sie verlaufen in parallelen Richtungen. Dies ist besonders raumsparend. Bei einer Vorrichtung mit zwei Karussells hat es sich als vorteilhaft erwiesen, wenn die abzugebenden Paletten beider Karussells bei der Abgabe die gleiche Orientierung haben. Dies ermöglicht eine einfache Übergabe vollständiger Palettenstapel von beiden Karussells an eine gemeinsame Palettenstapel-Abgabeeinheit mit gerader Förderstrecke, und zwar ohne dafür die Palettenstapel drehen zu müssen.

Eine weitere bevorzugte Ausführungsform der erfindungsgemäßen Vorrichtung sieht vor, dass die mehreren Paletten-Stapelplätze jeweils eine Vertiefung mit einem sich darin in radialer Richtung erstreckenden Mittelsteg aufweisen.

Bei einer Drehung des Karussells wirken auf die darauf gestapelten Paletten regelmäßig Kräfte ein. Eine Vertiefung trägt dazu bei, die Palettenstapel bei einer Drehung des Karussells in ihrer Position zu halten. Sie fixiert insbesondere die erste auf dem Paletten-Stapelplatz abgelegte Palette. Dies wirkt sich auch auf die darauf gestapelten Paletten aus. Der Mittelsteg trägt zu einer weiteren Fixierung zumindest der ersten auf dem Paletten-Stellplatz abgelegte Palette bei. Auf einen Paletten-Stapelplatz mit einer Vertiefung und einem sich darin in radialer Richtung erstreckenden Mittelsteg lassen sich zudem Paletten unterschiedlicher Abmessungen ablegen, beispielsweise auch Paletten mit sehr kurzer Paletten-Länge von weniger als 800 mm. Dabei genügt es für eine hinreichend stabile Ablage kleiner Paletten auf dem Paletten-Stapelplatz, selbst wenn diese nicht die gesamte Vertiefung überspannen, sondern mit einer Seite auf dem Mittelsteg aufliegen oder von dem Mittelsteg gestützt werden.

Im Hinblick auf das Verfahren zum Sortieren von Paletten anhand ihres Paletten-Typs wird die oben genannte Aufgabe erfindungsgemäß durch die im Kennzeichen des Patentanspruchs 10 aufgeführten Verfahrensschritte gelöst.

Nach der Erfindung ist verfahrensmäßig also vorgesehen, dass die sortierten Palettenstapel auf Paletten-Stapelplätzen eines ersten Palettenstapel-Karussells gebildet werden, wobei der dem Paletten-Typ der abzulegenden Palette entsprechende Paletten-Stapelplatz durch Drehen des Palettenstapel-Karussells in eine erste ortsfeste Ablageposition verbracht wird, die der Roboterarm bedient.

Ein Roboter mit einem Roboterarm hat einen begrenzten Arbeitsbereich. Dies macht sich besonders bemerkbar, wenn mit dem Roboterarm größere Gegenstände wie Paletten transportiert werden sollen. Durch den großen Raumbedarf üblicher Paletten ist damit regelmäßig schon ein Großteil des Arbeitsbereichs des Roboterarms beansprucht und das Vorsehen weiterer, ortsfester Paletten-Stapelplätze im Arbeitsbereich des Roboterarms kaum oder nur in begrenztem Umfang möglich. Dies beschränkt die Anzahl der Paletten-Typen die gleichzeitig mit dem Roboterarm sortiert werden können.

Der vorliegenden Erfindung liegt die Idee zugrunde, eine größere Anzahl von Paletten-Stapelplätzen bereitzustellen, indem anstelle der zahlenmäßig begrenzten, ortsfesten Paletten-Stapelplätze "bewegliche" Paletten-Stapelplätze eingesetzt werden, die bei Bedarf in den Arbeitsbereich des Roboterarms verbracht werden. Durch Drehen des Palettenstapel-Karussells kann eine dem Paletten-Typ der abzulegenden Palette entsprechender Paletten-Stapelplatz einfach und schnell in die erste ortsfeste Ablageposition verbracht werden. Ein solches Palettenstapel-Karussell ist besonders leicht ansteuerbar, bietet kurze Verfahrwege und begünstigt kurze Prozesszeiten.

Bei einer bevorzugten Modifikation des erfindungsgemäßen Verfahrens wird ein zweites Palettenstapel-Karussell eingesetzt, auf dem mehrere Paletten-Stapelplätze angeordnet sind, wobei jeder Paletten-Stapelplatz durch Drehen des zweiten Karussells in eine zweite Ablageposition verbracht werden kann, die der Roboterarm bedient.

Der Roboterarm ist hier so ausgelegt ist, dass er unabhängig von der Drehposition des zweiten Karussells zumindest eine ortsfeste Paletten-Ablageposition auf dem zweiten Karussell bedient. Durch Drehen des zweiten Palettenstapel-Karussells kann jeder der sich darauf befindenden Paletten-Stapelplätze in die Paletten-Ablageposition verbracht werden. Ein zweites Paletten-Karussell erhöht die Anzahl der beweglichen Paletten-Stapelplätze, die bei Bedarf in den Arbeitsraum des Roboters verbracht werden können. Gegenüber einem einzigen Paletten-Karussell hat der Einsatz von zwei Karussells den Vorteil geringerer Verfahr- und Drehwege, sowie einer Erhöhung der Prozessgeschwindigkeit.

Es hat sich als günstig erwiesen, wenn beim Bilden des Palettenstapels die Paletten paarweise verschachtelt werden, indem jede zweite Palette vor dem Ablegen der Palette gemäß Verfahrensschritt (d) vom Roboterarm um 180° gewendet wird.

Beim Drehen der Palette um 180° (Wenden) wird die Oberseite der Palette nach unten gewendet. Wird jede zweite Palette vor dem Aufeinanderstapeln der Paletten um 180° gedreht, können insbesondere die Paletten-Füße benachbarter Paletten ineinandergreifen, was eine besonders kompakte Stapelung der Paletten mit geringer Bauhöhe zur Folge hat. Treffen durch die Drehung um 180° zwei Paletten-Oberseiten aufeinander, stabilisiert die reibschlüssige Verbindung zwischen den Oberseiten ebenfalls den Palettenstapel. Hierdurch wird der Palettenstapel mechanisch stabilisiert und dessen Weitertransport erleichtert. Vorzugsweise weist der Roboterarm zu diesem Zweck einen Greifer mit einer Doppelgabel auf, der eine sich in Richtung der Gabeln erstreckende Greifer-Längsachse aufweist und um die Greifer-Längsachse um mindestens 180° verdrehbar ist.

Das Verfahren ist zum Betrieb der erfindungsgemäßen Vorrichtung geeignet und ausgelegt. Vorteilhafte Verfahrensmaßnahmen sind weiter oben im Zusammenhang der erfindungsgemäßen Vorrichtung erläutert und diese Erläuterungen werden hiermit einbezogen.

Der Vollständigkeit halber wird noch auf folgende Dokumente hingewiesen: DE 33 07 963 A1, DE 10 2018 220 355 A1, US 2004/0240979 A1, DE 100 29 908 A1 und EP 4 046 945 A1.

Nachfolgend wird die Erfindung anhand von Ausführungsbeispielen und Zeichnungen näher erläutert. Dabei zeigt im Einzelnen in schematischer Darstellung:
- Figur 1: eine erste Ausführungsform einer erfindungsgemäßen Vorrichtung zum Sortieren und Stapeln von Paletten anhand ihres Paletten-Typs mit einem Palettenstapel-Karussell,
- Figur 2: eine zweite Ausführungsform einer erfindungsgemäßen Vorrichtung zum Sortieren und Stapeln von Paletten anhand ihres Paletten-Typs, bei der Paletten-Stapelplätze auf einem ersten und einem zweiten Karussell angeordnet sind,
- Figur 3: einen Palettenstapel aus miteinander verschachtelten Paletten sowie einen Doppelgabel-Greifer mit einer davon gehaltenen Palette zur Verdeutlichung der Funktionsweise des Greifers beim Verschachteln von Paletten, und
- Figur 4: den Doppelgabel-Greifer aus Figur 3 in perspektivischer Ansicht beim Drehen einer Palette.

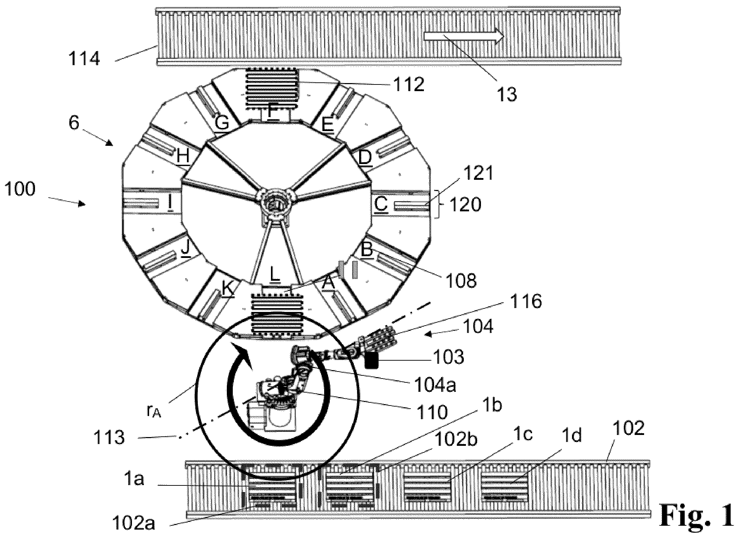

Figur 1 zeigt eine erste Ausführungsform einer erfindungsgemäßen Vorrichtung zum Sortieren von Paletten 1a, 1b, 1c, 1d, der insgesamt die Bezugsziffer 100 zugeordnet ist. Die Vorrichtung 100 umfasst eine Paletten-Zuführung 102, vorzugsweise eine Erfassungseinheit 103 zum Erfassen des Paletten-Typs I-XII zugeführter Paletten 1a, 1b, 1c, 1d, einen Roboter 104 zum Umlagern von Paletten 1a, 1b, 1c, 1d, ein Palettenstapel-Karussell 6 mit 12 darauf angeordneten Paletten-Stapelplätzen A-L sowie eine Palettenstapel-Abgabeeinheit 114 zum Abtransport vollständiger, sortierter Palettenstapel. Die nachfolgende Tabelle 1 zeigt beispielhaft zwölf Typen I-XII von Paletten 1a, 1b, 1c, 1d, die sich in ihren Abmessungen unterscheiden und mit der erfindungsgemäßen Vorrichtung 100 sortierbar sind.

**Tabelle 1**

| **Paletten-Typ** | **Länge [mm]** | **Breite [mm]** | **Höhe [mm]** | **Material** | **Zustand [intakt/defekt] Einweg** |
|---|---|---|---|---|---|
| I | 1.200 | 800 | 144 | Holz | intakt |
| II | 1.200 | 800 | 144 | Holz | defekt |
| III | 1.000 | 1.200 | 138 | Kunststoff | intakt |
| IV | 800 | 1.200 | 138 | Kunststoff | intakt |
| V | 1.140 | 1.140 | 138 | Kunststoff | intakt |
| VI | 1.100 | 1.300 | 138 | Kunststoff | intakt |
| VII | 1.000 | 1.200 | 138 | Kunststoff | defekt |
| VIII | 800 | 1.200 | 138 | Kunststoff | defekt |
| IX | 1.140 | 1.140 | 138 | Kunststoff | defekt |
| X | 1.100 | 1.300 | 138 | Kunststoff | defekt |
| XI | 1.300 | 1.300 | 142 | Holz | Einweg (Ausschuss) |
| XII | 600 | 400 | 140 | Holz | Einweg (Ausschuss) |

Es versteht sich, dass die erfindungsgemäße Vorrichtung 100 nicht auf das Sortieren dieser Paletten-Typen beschränkt ist. Vielmehr sind mit der Vorrichtung 100 Paletten mit Abmessungen im Bereich von 400 mm x 600 mm bis 1.300 mm x 1.300 mm (LxB) sortierbar. Da die Vorrichtung 100 zwölf Paletten-Stapelplätze A-L umfasst, sind mit der Vorrichtung 100 folglich auch Paletten 1a, 1b, 1c, 1d zwölf verschiedener Paletten-Typen I-XII typenrein sortierbar.

Mit der Vorrichtung 100 kann eine unsortierte, chaotische Gesamtheit von Paletten 1a, 1b, 1c, 1d unterschiedlicher Paletten-Typen I-XII sortiert werden. Hierzu werden die zu sortierenden Paletten 1a, 1b, 1c, 1d in zufälliger Abfolge über die Paletten-Zuführung 102 bereitgestellt.

Die Paletten-Zuführung 102 ist als Förderband ausgebildet. Die Paletten-Zuführung 102 ist so angeordnet, dass die auf ihr abgelegten Paletten 1a, 1b, 1c, 1d nacheinander einer der beiden Übernahmestellen 102a, 102b des Roboterarms 104a zuführbar sind. Die beiden Übernahmestellen 102a, 102b liegen auf dem Arbeitsradius r_{A} des Roboterarms 104a.

Der Roboter 104 weist einen um eine vertikale Achse 110 drehbaren Roboterarm 104a auf. Der Roboterarm umfasst einen Greifer 116 mit einer Doppelgabel. Der Roboterarm 104a hat eine Längsachse 113 und einen Arbeitsradius r_{A}, auf dem neben den beiden Übernahmestellen 102a, 102 b auch eine Paletten-Ablageposition 108 angeordnet ist. Die Paletten-Ablageposition 108 ist ortsfest. Die Lage der Paletten-Ablageposition 108 ist so gewählt, dass die Längsachse 113 des Roboterarms 104a beim Ablegen einer Palette auf der Ablageposition 108 radial zum Palettenstapel-Karussell 6 verläuft. Folglich ist der Roboter 104 so angeordnet, dass er eine Palette von jeder der beiden Übernahmestellen 102a, 102b entnehmen und diese in die Paletten-Ablageposition 108 verbringen und dort ablegen kann.

Darüber hinaus ist an dem Roboterarm 104a vorzugsweise eine Erfassungseinheit 103 angebracht, mit der der Paletten-Typ **I-**XII einer vom Roboterarm 104a von einer der Übernahmestellen 102a, 102b entnommenen Palette 1a, 1b, 1c, 1d erfassbar ist.

Die Erfassungseinheit 103 ist eine kalibrierte Kamera. Die kalibrierte Kamera erfasst vor und/oder während des Entnehmens einer Palette von einer Übernahmestelle der Paletten-Zuführung die Paletten-Abmessungen. Alternativ können mit einer kalibrierten Kamera auch die Materialeigenschaften und/oder der Zustand der entnommenen Palette erfasst werden. Alternativ ist die Erfassungseinheit 103 ein Code-Leser (Barcode, 2D-Code), der zuvor an die Palette entsprechend ihres Paletten-Typs angebrachte Codes erfasst. Vorzugsweise ist der Code an einem Paletten-Fuß angebracht.

Das Palettenstapel-Karussell 6 ist so angeordnet, dass sich die Paletten-Ablageposition 108 und einer der Paletten-Stapelplätze A-L des Palettenstapel-Karussells 6 überschneiden, wobei jeder der Paletten-Stapelplätze A-L durch Drehen des Palettenstapel-Karussells 6 in die Paletten-Ablageposition 108 verbracht werden kann. Jeder der auf dem Palettenstapel-Karussell 6 angeordneten Paletten-Stapelplätze A-L ist einem Paletten-Typ I-XII zugeordnet. Die Zuordnung erfolgt dabei vorteilhafterweise anhand einer erwarteten Verteilung der Paletten-Typen I-XII in der Paletten-Gesamtheit. Sind beispielsweise die Paletten-Typen I-XII in der Paletten-Gesamtheit in etwa gleichmäßig verteilt, bietet es sich an, jedem Paletten-Typ I-XII einen Paletten-Stapelplatz A-L auf dem Palettenstapel-Karussell 6 zuzuweisen. Ist beispielsweise ein Paletten-Typ I-XII in der Paletten-Gesamtheit erwartungsgemäß übermäßig häufig vertreten, kann es vorteilhaft sein, diesem Paletten-Typ I-XII zwei oder auch mehr Paletten-Stapelplätze A-L auf dem Palettenstapel-Karussell 6 zuzuweisen. Die Paletten-Stapelplätze A-L weisen eine Vertiefung 120 zur Aufnahme der ersten Palette 1a, 1b, 1c, 1d eines Palettenstapels auf. Die Vertiefung 120 weist einen Mittelsteg 121 auf, der sich - bezogen auf das Karussell 6 - in radialer Richtung erstreckt. Der Mittelsteg 121 ermöglicht eine stabile und sichere Ablage kleinerer Paletten 1a, 1b 1c, 1d mit einer Länge von weniger als 800 mm auf dem Palettenstapel-Karussell 6; er trägt dazu bei, dass Paletten 1a, 1b, 1c, 1d mit unterschiedlichsten Abmessungen auf dem Palettenstapel-Karussell gestapelt und sortiert werden können.

Ein vollständiger Palettenstapel, verschachtelt oder einzeln aufeinandergestapelt, hat eine Höhe von bis zu 3m. Das entspricht bis zu 33 Paletten, die aufeinandergestapelt sind. Vollständige Palettenstapel werden zunächst durch Drehen des Karussells 6 in die Paletten-Abgabestelle 112 verbracht. In der Paletten-Abgabestelle 112 sind die Paletten 1a, 1b, 1c, 1d gegenüber der Übernahmestelle um 180° gedreht und haben aufgrund ihres symmetrischen Aufbaus dieselbe Orientierung wie an der Übernahmestelle. Der vollständige Palettenstapel wird anschließend im Bereich der Paletten-Abgabestelle 112 von seinem Paletten-Stapelplatz auf dem Palettenstapel-Karussell entfernt und von der Palettenstapel-Abgabeeinheit114 übernommen. Dies geschieht möglichst zeitnah, um den Sortiervorgang nicht zu beeinträchtigen. Mit der Palettenstapel-Abgabeeinheit 114 werden die vollständigen Palettenstapel eines Paletten-Typs I-XII in Transportrichtung 13 abtransportiert und einer erneuten Wiederverwendung bzw. einer Zwischenlagerung zugeführt. Dadurch, dass die Orientierung der Paletten bei der Abgabe ihrer Orientierung an der Übernahmestelle 102a, 102b entspricht, verlaufen die Transportstrecken der Paletten-Zuführung 102 und der Palettenstapel-Abgabeeinheit 114 in einem Abschnitt parallel zueinander. Dies ist besonders platzsparend.

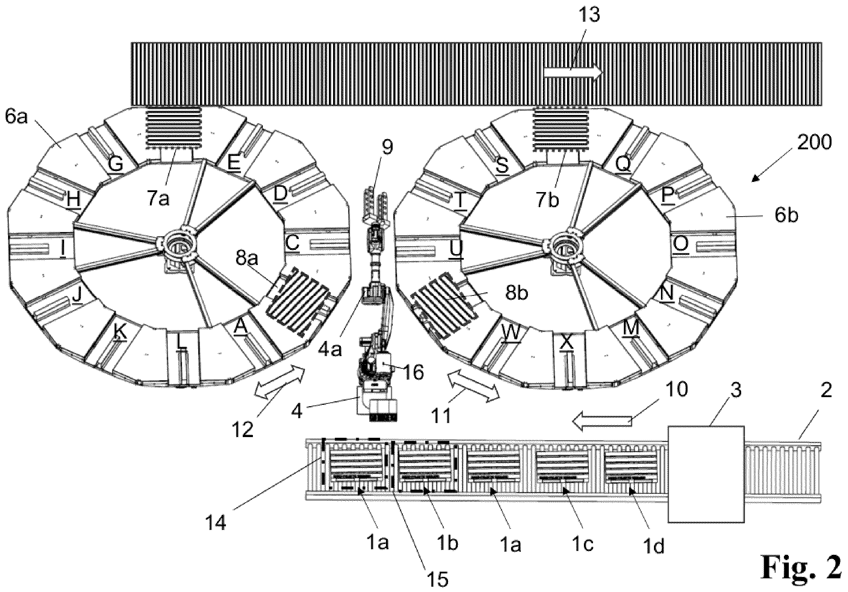

Figur 2 zeigt eine zweite Ausführungsform einer erfindungsgemäßen Vorrichtung zum Sortieren und Stapeln von Paletten 1a, 1b, 1c, 1d, der insgesamt die Bezugsziffer 200 zugeordnet ist. Die Vorrichtung 200 umfasst eine Paletten-Zuführung 2, über die Paletten 1a, 1b, 1c, 1d unterschiedlicher Paletten-Typen I-XII (wie in Tabelle 1 angegeben) in zufälliger Folge in Pfeilrichtung 10 einem Sortier-Roboter 4 zuführbar sind. Der Paletten-Zuführung 2 ist vorzugsweise eine Erfassungseinheit 3 in Form eines Kamerasystems aus mehreren Kameras zugeordnet, zum Ermitteln und Erfassen des Paletten-Typs I-XII zugeführter Paletten 1a, 1b, 1c, 1d. Die Kameras des Kamerasystems sind so angeordnet, dass jede Kamera eine zugeführte Palette aus einer anderen Raumrichtung, vorzugsweise von oben, von einer Längsseite und einer Breitseite, erfassen. In einer alternativen Ausführungsform (nicht dargestellt) sind die Kameras zusätzlich in entgegengesetzten Richtungen angeordnet. Dies ermöglicht eine Erfassung der Paletten 1a, 1b, 1c, 1d beispielsweise von oben und von unten, von beiden Längsseiten und/oder beiden Breitseiten. Darüber hinaus umfasst die Vorrichtung 200 zwei Paletten-Karussells 6a, 6b, auf denen jeweils 12 Paletten-Stapelplätze A-L, M-X angeordnet sind. Durch Drehen der Palettenstapel-Karussells 6a, 6b lässt sich jeder der Paletten-Stapelplätze A-L, M-X in eine der vom Roboterarm 4a bedienten, ortsfesten Paletten-Ablagepositionen 8a, 8b überführen, nämlich die Paletten-Stapelplätze A-L des ersten Karussells 6a in die Paletten-Ablageposition 8a und die Paletten-Stapelplätze M-X des zweiten Karussells 6b in die Paletten-Ablageposition 8b. Die Drehrichtung 11, 12 der Paletten-Karussells 6a, 6b ist nicht festgelegt; sie können in beide Drehrichtungen (siehe Pfeile 11, 12) gedreht werden, je nachdem, welche Richtung den kürzeren Drehweg zum Erreichen des gewünschten Paletten-Stapelplatzes A-L, M-X erfordert.

Jedes der beiden Paletten-Karussells 6a, 6b hat neben der ortsfesten Ablageposition 8a bzw. 8b eine ortsfeste Palettenstapel-Abgabestelle 7a bzw. 7b. Durch Drehen des ersten Karussells 6a ist jeder der Paletten-Stapelplätze A-L in die Ablageposition 8a bzw. in die Abgabeposition 7a verbringbar. Durch Drehen des zweiten Karussells kann jeder der Paletten-Stapelplätze M-X in die Ablageposition 8b bzw. in die Abgabeposition 7b verbracht werden. Die Ablagepositionen 8a, 8b sind dabei so ausgerichtet, dass beim Ablegen einer Palette 1a, 1b, 1c, 1d die Längsachse des Roboterarms radial zu dem Palettenstapel-Karussell 6a, 6b verläuft, auf das die Palette 1a, 1b, 1c, 1d abgelegt wird. Die Vorgänge "Paletten-Ablage" und "Palettenstapel-Abgabe" können grundsätzlich parallel erfolgen. Die Vorrichtung 100 lässt sich aber auch in einem separaten Paletten-Ablage-Modus und einem separaten Palettenstapel-Abgabe-Modus betreiben.

Der Sortierroboter 4 hat einen um eine vertikale Achse 16 drehbaren Roboterarm 4a. Der Roboterarm 4a ist so ausgelegt, dass er Paletten sowohl von einer ersten Übernahmestelle 14 als auch von einer zweiten Übernahmestelle 15 von der Paletten-Zuführung 2 entnehmen und auf einer der Paletten-Ablagepositionen 8a, 8b abgelegen kann. Zu diesem Zweck ist der Roboterarm mit einem Doppelgabel-Greifer 9 ausgestattet.

Anhand von Figur 2 soll nachfolgend das erfindungsgemäße Verfahren näher erläutert werden:
Es wird eine unsortierte Menge von Paletten 1a, 1b, 1c, 1d bereitgestellt, die sich in ihrem Paletten-Typ I-XII (Tabelle 1) unterscheiden und die mit der erfindungsgemäßen Vorrichtung 200 sortiert und typenrein gestapelt werden sollen. Die unsortierte Menge umfasst beispielsweise 16 verschiedene Paletten-Typen, also außer denen von Tabelle 1 noch vier weitere Typen. Aus Vereinfachungsgründen zeigt Figur 2 nur vier verschiedene Paletten-Typen.

Die Paletten 1a, 1b, 1c, 1d werden in zufälliger Reihenfolge mit der Paletten-Zuführung 2 dem Sortier-Roboter 4 zugeführt. Hierbei durchlaufen die Paletten 1a, 1b, 1c, 1d zunächst vorzugsweise eine tunnelförmige Erfassungseinheit 3, mit der der Paletten-Typ I-XII der zugeführten Paletten 1a, 1b, 1c, 1d in der Reihenfolge der Zuführung ermittelt wird. Ein Erfassen des Paletten-Typs I-XII vor dem eigentlichen Sortiervorgang trägt dazu bei, das Sortierverfahren zu beschleunigen. Zwei Positionen auf der Paletten-Zuführung 2 sind Übernahmestellen 14, 15. Die Paletten 1a, 1b, 1c, 1d werden nacheinander mit der Paletten-Zuführung 2 den Übernahmestellen 14, 15 zugeführt. Schließlich werden die Paletten-Karussells 6a, 6b entsprechend den Paletten-Typen I-XII der den Übernahmestellen 14, 15 zuletzt zugeführten Paletten 1a, 1b, 1c, 1d positioniert, und zwar derart, dass demnächst benötigte Paletten-Stapelplätze A-L, M-X durch Drehen des jeweiligen Karussells 6a, 6b in die zugehörige Ablageposition 8a, 8b verbracht werden. Dies trägt zur Beschleunigung des Sortierverfahrens bei, insbesondere, wenn während des Ablegens einer Palette 1a, 1b, 1c, 1d auf einem der Karussells 6a, 6b das andere Karussell 6a, 6b entsprechend dem Paletten-Typ I-XII der nächstes zu sortierenden Palette 1a, 1b, 1c, 1d zu positioniert wird. Von den Übernahmestellen 14, 15 entnimmt der Sortier-Roboter 4 eine Palette 1a, 1b, 1c, 1d und legt diese entsprechend ihres Paletten-Typs I-XII auf der Ablageposition 8a, 8b ab, in die zuvor der zugehörige Paletten-Stapelplatz A-L, M-X durch Drehen des Karussells 6a, 6b verbracht wurde. Einer freigewordenen Übernahmestelle 14, 15 wird mit der Paletten-Zuführung 2 eine der weiteren zu sortierenden Paletten 1a, 1b, 1c, 1d zugeführt. Anschließend werden die zuvor beschriebenen Verfahrensschritte unter Bildung von sortierter Palettenstapel wiederholt. Beim Bilden der Palettenstapel werden die Paletten paarweise verschachtelt. Hierzu wird jede zweite Palette vor dem Ablegen um 180° gewendet. Vollständige Palettenstapel werden vom Karussell zur weiteren Verwendung entfernt. Hierzu wird der zuvor beschriebene Palettenstapel-Bildungsprozess zumindest auf einem der Karussells 6a, 6b unterbrochen, der Paletten-Stapelplatz A-L, M-X mit dem vollständigen Palettenstapel durch Drehen des jeweiligen Karussells 6a, 6b in die zugehörige ortsfeste Abgabeposition 7a, 7b verbracht, und der vollständige, typenreine Palettenstapel mit der Palettenstapel-Abgabeeinheit 114 in Transportrichtung 13 abtransportiert. Anschließend wird der zuvor beschriebene Palettenstapel-Bildungsprozess fortgesetzt.

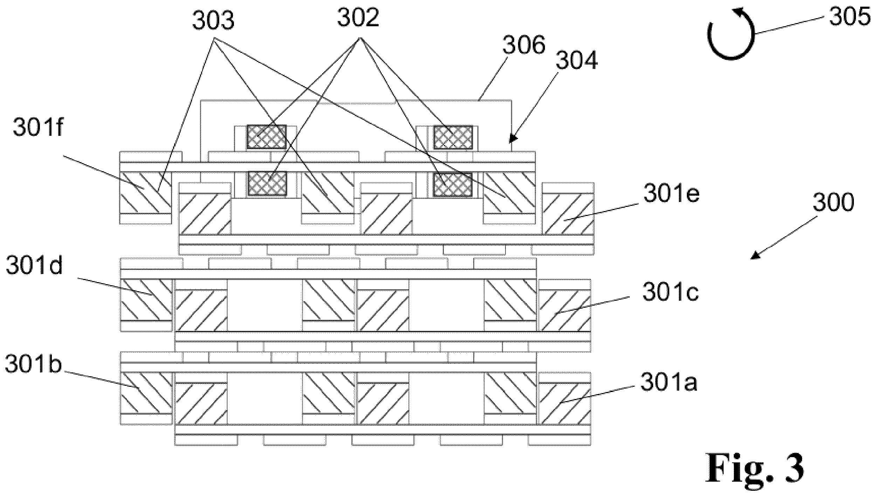

Figur 3 zeigt schematisch einen Palettenstapel 300 aus miteinander verschachtelten Paletten 301a, 301b, 301c, 301d, 301 e sowie einen Doppelgabel-Greifer 306 mit einer von den Doppelgabeln 302 des Doppelgabel-Greifers 306 gehaltenen Palette 301f zur Verdeutlichung der Funktionsweise des Greifers 306 beim Verschachteln von Paletten 301a, 301b, 301c, 301d, 301e, 301f. Die Doppelgabeln 302 des Doppelgabel-Greifer 306 greifen eine Palette 301a, 301b, 301c, 301d, 301e, 301f einerseits zwischen den Paletten-Füßen 303 und andererseits von der Paletten-Oberseite 304. Hierdurch ist es möglich eine Palette um 180° zu drehen. Pfeil 305 zeigt die Drehrichtung.

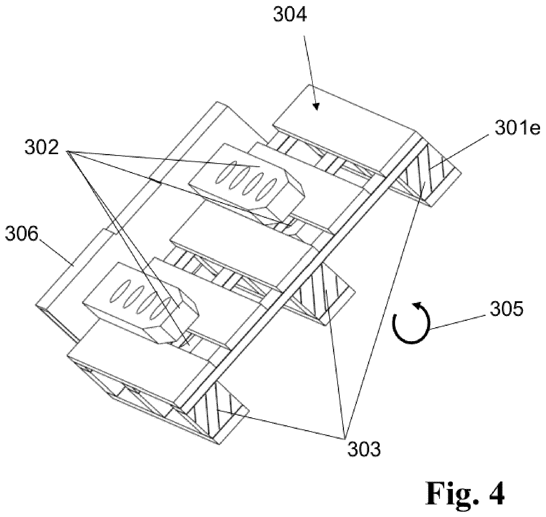

Figur 4 zeigt den Doppelgabel-Greifer 306 aus Figur 3 in perspektivischer Ansicht beim Drehen der Palette 301e. Die Palette 301e ist von den Doppelgabeln 302 gehalten, wobei diese die Palette 301e von der Paletten Oberseite 304 und zwischen den Paletten-Füßen 303 einklemmen. Die Drehrichtung zeigt Pfeil 305.

## Patentansprüche

1. Vorrichtung (100; 200) zum Sortieren von Paletten (1a; 1b; 1c; 1d; 301a; 301b; 301c; 301d; 301e; 301f) anhand ihres Paletten-Typs (I-XII), aufweisend
- eine Paletten-Zuführung (2; 102),
- einen Roboter (4; 104) mit einem um eine vertikale Achse (16; 110) drehbaren Roboterarm (4a; 104a), und
- mehrere Paletten-Stapelplätze (A-L; M-X) zur stapelförmigen Aufnahme von nach Paletten-Typ (I-XII) sortierten Paletten (1a; 1b; 1c; 1d; 301a; 301b; 301c; 301d; 301e; 301f) unter Bildung jeweils sortierter Palettenstapel (300),
wobei der Roboterarm (4a; 104a) zum Entnehmen einer Palette (1a; 1b; 1c; 1d; 301a; 301b; 301c; 301d; 301e; 301f) von mindestens einer Übernahmestelle (14; 15; 102a; 102b) der Paletten-Zuführung (2; 102) und zur Ablage der Palette (1a; 1b; 1c; 1d; 301a; 301b; 301c; 301d; 301e; 301f) auf einem der Paletten-Stapelplätze (A-L; M-X) ausgelegt ist, **dadurch gekennzeichnet, dass** die Vorrichtung (100; 200) ein erstes Palettenstapel-Karussell (6; 6a; 6b) umfasst, auf dem mehrere der Paletten-Stapelplätze (A-L; M-X) angeordnet sind, wobei jeder dieser Paletten-Stapelplätze (A-L; M-X) durch Drehen des Palettenstapel-Karussells (6; 6a; 6b) in eine erste ortsfeste Paletten-Ablageposition (8a; 8b; 108) verbringbar ist, die der Roboterarm (4a; 104a) bedient.

2. Vorrichtung (100; 200) nach Anspruch 1, **dadurch gekennzeichnet, dass** die Vorrichtung (100; 200) ein zweites Palettenstapel-Karussell (6; 6a; 6b) umfasst, auf dem mehrere der Paletten-Stapelplätze (A-L; M-X) angeordnet sind, wobei jeder dieser Paletten-Stapelplätze (A-L; M-X) durch Drehen des zweiten Karussells (6; 6a; 6b) in eine zweite ortsfeste Paletten-Ablageposition (8a; 8b; 108) verbringbar ist, die der Roboterarm (4a; 104a) bedient.

3. Vorrichtung (100; 200) nach Anspruch 2, **dadurch gekennzeichnet, dass** der Roboterarm (4a; 104a) einen Arbeitsradius r_{A} aufweist, auf dem die Übernahmestelle (14; 15; 102a; 102b), die erste Ablageposition (8a; 8b; 108) und die zweite Ablageposition (8a; 8b; 108) angeordnet sind.

4. Vorrichtung (100; 200) nach Anspruch 3, **dadurch gekennzeichnet, dass** der Roboterarm (4a; 104a) eine Längsachse (113) aufweist, und die erste Ablageposition (8a; 8b; 108) und die zweite Ablageposition (8a; 8b; 108) so gewählt sind, dass die Längsachse (113) des Roboterarms (4a; 104a) im Bereich der ersten Ablageposition (8a; 8b; 108) radial zum ersten Palettenstapel-Karussell (6; 6a; 6b) und im Bereich der zweiten Ablageposition (8a; 8b; 108) radial zum zweiten Palettenstapel-Karussell (6; 6a; 6b) verläuft.

5. Vorrichtung (100; 200) nach einem oder mehreren der vorhergehenden Ansprüche, **dadurch gekennzeichnet, dass** auf dem ersten und/oder zweiten Palettenstapel-Karussell (6; 6a; 6b) mindestens vier Paletten-Stapelplätze (A-L; M-X), besonders bevorzugt mindestens acht Paletten-Stapelplätze (A-L; M-X), vorzugsweise zwölf Paletten-Stapelplätze (A-L; M-X), angeordnet sind.

6. Vorrichtung (100; 200) nach einem der vorhergehenden Ansprüche, **dadurch gekennzeichnet, dass** der Roboterarm (4a; 104a) einen Greifer (9; 116; 306) mit einer Doppelgabel (302) aufweist.

7. Vorrichtung (100; 200) nach einem der vorhergehenden Ansprüche 2 bis 6, **dadurch gekennzeichnet, dass** das erste und/oder das zweite Paletten-Karussell (6; 6a; 6b) jeweils eine einzige, vorgegebene Paletten-Abgabestelle (7a; 7b; 112) aufweisen, in die die jeweiligen Paletten-Stapelplätze (A-L; M-X) durch Drehen des jeweiligen Karussells (6; 6a; 6b) verbringbar sind.

8. Vorrichtung (100; 200) nach Anspruch 7, **dadurch gekennzeichnet, dass** die Abgabestelle (7a; 7b; 112) an einer Drehposition des Karussells (6; 6a; 6b) vorgesehen ist, an der die abzugebenden Paletten (1a; 1b; 1c; 1d; 301a; 301b; 301c; 301d; 301e; 301f) eine Orientierung haben, die ihrer Orientierung an der Übernahmestelle (14; 15; 102a; 102b) entspricht.

9. Vorrichtung (100; 200) nach einem der vorhergehenden Ansprüche, **dadurch gekennzeichnet, dass** die mehreren Paletten-Stapelplätze (A-L; M-X) jeweils eine Vertiefung (120) mit einem sich darin in radialer Richtung erstreckenden Mittelsteg (121) aufweisen.

10. Verfahren zum Sortieren von Paletten (1a; 1b; 1c; 1d; 301a; 301b; 301c; 301d; 301e; 301f) anhand ihres Paletten-Typs (I-XII), umfassend die Verfahrensschritte:
(a) Bereitstellen von Paletten (1a; 1b; 1c; 1d; 301a; 301b; 301c; 301d; 301e; 301f) unterschiedlicher Paletten-Typen (I-XII) mittels einer Paletten-Zuführung (2; 102),
(b) Entnehmen einer Palette (1a; 1b; 1c; 1d; 301a; 301b; 301c; 301d; 301e; 301f) von mindestens einer Übernahmestelle (14; 15; 102a; 102b) der Paletten-Zuführung (2; 102) mit einem um eine vertikale Achse (16; 110) drehbaren Roboterarm (4a; 104a),
(c) Ablegen der Palette (1a; 1b; 1c; 1d; 301a; 301b; 301c; 301d; 301e; 301f) auf einem von mehreren Paletten-Stapelplätzen (A-L; M-X) für Paletten (1a; 1b; 1c; 1d; 301a; 301b; 301c; 301d; 301e; 301f) eines bestimmten Paletten-Typs (I-XII) anhand des für diese Palette (1a; 1b; 1c; 1d; 301a; 301b; 301c; 301d; 301e; 301f) erfassten Paletten-Typs (I-XI) mit dem Roboterarm (4a; 104a),
(d) Bilden sortierter Palettenstapel (300) durch Wiederholen der Verfahrensschritte (c) und (d),
**dadurch gekennzeichnet, dass** die sortierten Palettenstapel (300) auf Paletten-Stapelplätzen (A-L; M-X) eines ersten Palettenstapel-Karussells (6; 6a; 6b) gebildet werden, wobei der dem Paletten-Typ (I-XII) der abzulegenden Palette (1a; 1b; 1c; 1d; 301a; 301b; 301c; 301d; 301e; 301f) entsprechende Paletten-Stapelplatz (A-L; M-X) durch Drehen des Palettenstapel-Karussells (6; 6a; 6b) in eine erste ortsfeste Ablageposition (8a; 8b; 108) verbracht wird, die der Roboterarm (4a;104a) bedient.

11. Verfahren nach Anspruch 10, **dadurch gekennzeichnet, dass** ein zweites Palettenstapel-Karussell (6; 6a; 6b) eingesetzt wird, auf dem mehrere Paletten-Stapelplätze (A-L; M-X) angeordnet sind, wobei jeder Paletten-Stapelplatz (A-L; M-X) durch Drehen des zweiten Karussells (6; 6a; 6b) in eine zweite Ablageposition (8a; 8b; 108) verbracht werden kann, die der Roboterarm (4a; 104a) bedient.

12. Verfahren nach einem der vorhergehenden Ansprüche 10 oder 11, **dadurch gekennzeichnet, dass** beim Bilden des Palettenstapels (300) die Paletten (1a; 1b; 1c; 1d; 301a; 301b; 301c; 301d; 301e; 301f) paarweise verschachtelt werden, indem jede zweite Palette (1a; 1b; 1c; 1d; 301a; 301b; 301c; 301d; 301e; 301f) vor dem Ablegen der Palette (1a; 1b; 1c; 1d; 301a; 301b; 301c; 301d; 301e; 301f) gemäß Verfahrensschritt (d) vom Roboterarm (4a; 104a) um 180° gewendet wird.

## Claims

1. A device (100; 200) for sorting pallets (1a; 1b; 1c; 1d; 301a; 301b; 301c; 301d; 301e; 301f) according to their pallet type (I-XII), comprising
- a pallet feeder (2; 102),
- a robot (4; 104) with a robot arm (4a; 104a) rotatable about a vertical axis (16; 110), and
- several pallet stacking areas (A-L; M-X) for receiving in a stacked manner pallets (1a; 1b; 1c; 1d; 301a; 301b; 301c; 301d; 301e; 301f) sorted by pallet type (I-XII) forming respectively sorted pallet stacks (300),
wherein the robot arm (4a; 104a) is designed to remove a pallet (1a; 1b; 1c; 1d; 301a; 301b; 301c; 301d; 301e; 301f) from at least one receiving point (14; 15; 102a; 102b) of the pallet feeder (2; 102) and to deposit the pallet (1a; 1b; 1c; 1d; 301a; 301b; 301c; 301d; 301e; 301f) on one of the pallet stacking areas (A-L; M-X), **characterized in that** the device (100; 200) comprises a first pallet stacking carousel (6; 6a; 6b) on which several of the pallet stacking areas (A-L; M-X) are arranged, wherein each of these pallet stacking areas (A-L; M-X), by rotating the pallet stacking carousel (6; 6a; 6b), can be brought into a first stationary pallet storage position (8a; 8b; 108), which is served by the robot arm (4a; 104a).

2. The device (100; 200) according to claim 1, **characterized in that** the device (100; 200) comprises a second pallet stacking carousel (6; 6a; 6b) on which several of the pallet stacking areas (A-L; M-X) are arranged, wherein each of these pallet stacking areas (A-L; M-X) can be brought into a second stationary pallet storage position (8a; 8b; 108) by rotating the second carousel (6; 6a; 6b), which is served by the robot arm (4a; 104a).

3. The device (100; 200) according to claim 2, **characterized in that** the robot arm (4a; 104a) has a working radius r_{A} on which the receiving point (14; 15; 102a; 102b), the first storage position (8a; 8b; 108) and the second storage position (8a; 8b; 108) are arranged.

4. The device (100; 200) according to claim 3, **characterized in that** the robot arm (4a; 104a) has a longitudinal axis (113), and the first storage position (8a; 8b; 108) and the second storage position (8a; 8b; 108) are selected such that the longitudinal axis (113) of the robot arm (4a; 104a) runs radially to the first pallet stacking carousel (6; 6a; 6b) in the region of the first storage position (8a; 8b; 108) and radially to the second pallet stacking carousel (6; 6a; 6b) in the region of the second storage position (8a; 8b; 108).

5. The device (100; 200) according to one of the preceding claims, **characterized in that** at least four pallet stacking areas (A-L; M-X), particularly preferably at least eight pallet stacking areas (A-L; M-X), preferentially twelve pallet stacking areas (A-L; M-X), are arranged on the first and/or second pallet stacking carousel (6; 6a; 6b).

6. The device (100; 200) according to one of the preceding claims, **characterized in that** the robot arm (4a; 104a) has a gripper (9; 116; 306) with a double fork (302).

7. The device (100; 200) according to one of the preceding claims 2 to 6, **characterized in that** the first and/or the second pallet carousel (6; 6a; 6b) each have a single, predetermined pallet delivery point (7a; 7b; 112) into which the respective pallet stacking places (A-L; M-X) can be brought by rotating the respective carousel (6; 6a; 6b).

8. The device (100; 200) according to claim 7, **characterized in that** the delivery point (7a; 7b; 112) is provided at a rotary position of the carousel (6; 6a; 6b) at which the pallets (1a; 1b; 1c; 1d; 301a; 301b; 301c; 301d; 301e; 301f) to be delivered have an orientation that corresponds to their orientation at the receiving point (14; 15; 102a; 102b).

9. The device (100; 200) according to one of the preceding claims, **characterized in that** the multiple pallet stacking areas (A-L; M-X) each have a recess (120) with a central web (121) extending therein in a radial direction.

10. A method for sorting pallets (1a; 1b; 1c; 1d; 301a; 301b; 301c; 301d; 301e; 301f) according to their pallet type (I-XII), comprising the method steps:
(a) Providing pallets (1a; 1b; 1c; 1d; 301a; 301b; 301c; 301d; 301e; 301f) of different pallet types (I-XII) by means of a pallet feeder (2; 102),
(b) Removing a pallet (1a; 1b; 1c; 1d; 301a; 301b; 301c; 301d; 301e; 301f) from at least one receiving point (14; 15; 102a; 102b) of the pallet feeder (2; 102) using a robot arm (4a; 104a) rotatable about a vertical axis (16; 110),
(c) Depositing the pallet (1a; 1b; 1c; 1d; 301a; 301b; 301c; 301d; 301e; 301f) on one of several pallet stacking areas (A-L; M-X) for pallets (1a; 1b; 1c; 1d; 301a; 301b; 301c; 301d; 301e; 301f) of a specific pallet type (I-XII) according to the pallet type (I-XI) detected for this pallet (1a; 1b; 1c; 1d; 301a; 301b; 301c; 301d; 301e; 301f) with the robot arm (4a; 104a),
(d) Forming sorted pallet stacks (300) by repeating the method steps (c) and (d),
**characterized in that** the sorted pallet stacks (300) are formed on pallet stacking areas (A-L; M-X) of a first pallet stacking carousel (6; 6a; 6b), wherein the pallet stacking area (A-L; M-X) corresponding to the pallet type (I-XII) of the pallet (1a; 1b; 1c; 1d; 301a; 301b; 301c; 301d; 301e; 301f) which is to be deposited is brought by rotating the pallet stacking carousel (6; 6a; 6b) into a first stationary storage position (8a; 8b; 108) which is served by the robot arm (4a; 104a).

11. The method according to claim 10, **characterized in that** a second pallet stacking carousel (6; 6a; 6b) is used, on which several pallet stacking areas (A-L; M-X) are arranged, wherein each pallet stacking area (A-L; M-X) can be brought by rotating the second carousel (6; 6a; 6b) into a second storage position (8a; 8b; 108), which is served by the robot arm (4a; 104a).

12. The method according to one of the preceding claims 10 or 11, **characterized in that** when forming the pallet stack (300), the pallets (1a; 1b; 1c; 1d; 301a; 301b; 301c; 301d; 301e; 301f) are nested in pairs, by each second pallet (1a; 1b; 1c; 1d; 301a; 301b; 301c; 301d; 301e; 301f) being turned by 180° by the robot arm (4a; 104a) before the pallet (1a; 1b; 1c; 1d; 301a; 301b; 301c; 301d; 301e; 301f) is deposited according to method step (d).

## Revendications

1. Dispositif (100 ; 200) de triage de palettes (1a ; 1b ; 1c ; 1d ; 301a ; 301b ; 301c ; 301d ; 301e ; 301f) à l'aide de leur type de palette (I-XII), comportant
- un système d'alimentation de paletttes (2 ; 102),
- un robot (4 ; 104) avec un bras de robot (4a ; 104a) pouvant tourner autour d'un axe vertical (16 ; 110), et
- plusieurs emplacements d'empilage de palettes (A-L ; M-X) pour recevoir sous forme de piles des palettes (1a ; 1b ; 1c ; 1d ; 301a ; 301b ;301c ; 301d ; 301e ; 301f) triées selon le type de palette (I-XII) en formant à chaque fois des piles de palettes triées (300),
sachant que le bras de robot (4a ; 104a) est conçu pour prélever une palette (1a ; 1b ; 1c ; 1d ; 301a ; 301b ;301c ; 301d ; 301e ; 301f) d'au moins un emplacement de prise en charge (14 ; 15 ; 102a ; 102b) de système d'alimentation de palettes (2 ; 102) et pour deposer la palette (1a ; 1b ; 1c ; 1d ; 301a ; 301b ; 301c ; 301d ; 301e ; 301f) sur un des emplacements d'empilage de palettes (A-L ; M-X), **caractérisé en ce que** le dispositif (100 ; 200) comprend un premier carrousel d'empilage de palettes (6 ; 6a ; 6b) sur lequel sont disposés plusieurs des emplacements d'empilage de palettes (A-L ; M-X), sachant que chacun de ces emplacements d'empilage de palettes (A-L ; M-X) peut être transféré par rotation du carrousel d'empilage de palettes (6 ; 6a ; 6b) dans une première position de dépôt de palettes fixe (8a ; 8b ; 108), que dessert le bras de robot (4a ; 104a).

2. Dispositif (100 ; 200) selon la revendication 1, **caractérisé en ce que** le dispositif (100 ; 200) comprend un deuxième caroussel d'empilage de palettes (6 ; 6a ; 6b) sur lequel sont disposés plusieurs des emplacements d'empilage de palettes (A-L ; M-X), sachant que chacun de ces emplacements d'empilage de palettes (A-L ; M-X) peut être transféré par rotation du deuxième carrousel (6 ; 6a ; 6b) dans une deuxième position de dépôt de palettes fixe (8a ; 8b ; 108), que dessert le bras de robot (4a ; 104a).

3. Dispositif (100 ; 200) selon la revendication 2 ; **caractérisé en ce que** le bras de robot (4a ; 104a) comporte un rayon d'action r_{A} sur lequel sont disposés l'emplacement de prise en charge (14 ; 15 ; 102a ; 102b), la première position de dépôt (8a ; 8b ; 108) et la deuxième position de dépôt (8a ; 8b ; 108).

4. Dispositif (100 ; 200) selon la revendication 3, **caractérisé en ce que** le bras de robot (4a ; 104a) comporte un axe longitudinal (113) et la première position de dépôt (8a ; 8b ; 108) et la deuxième position de dépôt (8a ; 8b ; 108) sont choisies de telle manière que l'axe longitudinal (113) du bras de robot (4a ; 104a) passe radialement par rapport au premier carrousel d'empilage de palettes (6 ; 6a ; 6b) dans la zone de la première position de dépôt (8a ; 8b ; 108) et radialement par rapport au deuxième carrousel d'empilage de palettes (6 ; 6a ; 6b) dans la zone de la deuxième position de dépôt (8a ; 8b ; 108).

5. Dispositif (100 ; 200) selon l'une quelconque ou plusieurs des revendications précédentes ; **caractérisé en ce que** sur le premier et/ou le deuxième carrousel d'empilage de palettes (6 ; 6a ; 6b) sont disposés au moins quatre emplacements d'empilage de palettes (A-L ; M-X) ; en particulier de préférence au moins huit emplacements d'empilage de palettes (A-L ; M-X) ; de préférence douze emplacements d'empilage de palettes (A-L ; M-X).

6. Dispositif (100 ; 200) selon l'une quelconque des revendications précédentes, **caractérisé en ce que** le bras de robot (4a ; 104a) comporte un préhenseur (9 ; 116 ; 306) avec une fourche double (302).

7. Dispositif (100 ; 200) selon l'une quelconque des revendications précédentes 2 à 6, **caractérisé en ce que** le premier et/ou le deuxième carrousel d'empilage de palettes (6 ; 6a ; 6b) comportent à chaque fois un point de distribution de palettes individuel prédéfini (7a ; 7b ; 112) dans lequel les emplacements d'empilage de palettes respectifs (A-L ; M-X) peuvent être transférés par rotation du carrousel respectif (6 ; 6a ; 6b).

8. Dispositif (100 ; 200) selon la revendication 7, **caractérisé en ce que** le point de distribution (7a ; 7b ; 112) est prévu sur une position de rotation du carrousel (6 ; 6a ; 6b) sur laquelle les palettes à déposer (1a ; 1b ; 1c ; 1d ; 301a ; 301b ;301c ; 301d ; 301e ; 301f) ont une orientation, qui correspond à leur orientation sur l'emplacement de prise en charge (14 ; 15 ; 102a ; 102b).

9. Dispositif (100 ; 200) selon l'une quelconque des revendications précédentes, **caractérisé en ce que** les nombreux emplacements d'empilage de palettes (A-L ; M-X) comportent à chaque fois une cavité (120) avec une nervure centrale (121) s'étendant dedans en direction radiale.

10. Procédé de triage de palettes (1a ; 1b ; 1c ; 1d ; 301a ; 301b ; 301c ; 301d ; 301e ; 301f) à l'aide de leur type de palette (I-XII), comprenant les étapes de procédé de:
(a) fourniture de palettes (1a ; 1b ; 1c ; 1d ; 301a ; 301b ; 301c ; 301d ; 301e ; 301f) de types de palette différents (I-XII) au moyen d'un système d'alimentation de palettes (2 ; 102),
(b) prélèvement d'une palette (1a ; 1b ; 1c ; 1d ; 301a ; 301b ; 301c ; 301d ; 301e ; 301f) d'au moins un emplacement de prise en charge (14 ; 15 ; 102a ; 102b) du système d'alimentation de palettes (2 ; 102) avec un bras de robot (4a ; 104a) pouvant tourner autour d'un axe vertical (16 ; 110),
(c) dépose de palette (1a ; 1b ; 1c ; 1d ; 301a ; 301b ; 301c ; 301d ; 301e ; 301f) sur un des nombreux emplacements d'empilage de palettes (A-L ; M-X) pour des palettes (1a ; 1b ; 1c ; 1d ; 301a ; 301b ;301c ; 301d ; 301e ; 301f) d'un type de palette (I-XII) déterminé à l'aide du type de palette (I-XI) saisi pour cette palette (1a ; 1b ; 1c ; 1d ; 301a ; 301b ; 301c ; 301d ; 301e ; 301f) avec le bras de robot (4a ; 104a),
(d) formation des piles de palettes triées (300) en répétant les étapes de procédé (c) et (d),
**caractérisé en ce que** les piles de palettes triées (300) sont formées sur les emplacements d'empilage de palettes (A-L ; M-X) d'un premier carrousel d'empilage de palettes (6 ; 6a ; 6b), sachant que l'emplacement d'empilage de palettes (A-L ; M-X) correspondant au type de palette (I-XII) de la palette à déposer (1a ; 1b ; 1c ; 1d ; 301a ; 301b ; 301c ; 301d ; 301e ; 301f) est transféré par rotation du carrousel d'empilage de palettes (6 ; 6a ; 6b) dans une première position de dépôt fixe (8a ; 8b ; 108) ; que dessert le bras de robot (4a ; 104a).

11. Procédé selon la revendication 10, **caractérisé en ce qu'**un deuxième carrousel d'empilage de palettes (6 ; 6a ; 6b) est utilisé sur lequel sont disposés plusieurs emplacements d'empilage de palettes (A-L ; M-X), sachant que chaque emplacement d'empilage de palettes (A-L ; M-X) peut être transféré par rotation du deuxième carrousel (6 ; 6a ; 6b) dans une deuxième position de dépôt (8a ; 8b ; 108), que dessert le bras de robot (4a ; 104a).

12. Procédé selon l'une quelconque des revendications précédentes 10 ou 11 ; **caractérisé en ce que** lors de la formation de la pile de palettes (300), les palettes (1a ; 1b ; 1c ; 1d ; 301a ; 301b ; 301c ; 301d ; 301e ; 301f) sont emboîtées par paires, chaque deuxième palette (1a ; 1b ; 1c ; 1d ; 301a ; 301b ; 301c ; 301d ; 301e ; 301f) étant tournée de 180° par le bras de robot (4a ; 104a) avant la dépose de la palette (1a ; 1b ; 1c ; 1d ; 301a ; 301b ; 301c ; 301d ; 301e ; 301f) selon l'étape de procédé (d).
